# EUROPEAN PATENT APPLICATION

(11) **EP 3 989 134 A1**
(43) Date of publication of application: **27.04.2022**
(21) Application number: 20203711.5
(22) Date of filing: 23.10.2020
(51) Int. Cl.: G06Q 10/04, A62C 35/58

(54) **CONSTRAINT PROGRAMMING METHODS FOR OPTIMAL DESIGN CONFIGURATIONS OF DISTRIBUTION SYSTEMS**

(71) Applicant: United Technologies Research Centre Ireland, Limited, T23 XN53 Cork City (IE)
(72) Inventor: JARVIS, Padraigh, Cork T12 HK4W (IE); WAHBI, Mohamed, Cork T45 XE00 (IE); CAO, Changmin, Cork T12 CX82 (IE); RIDOUANE, El Hassan, Cork T23 A5W0 (IE)
(74) Representative: Dehns

(57) **Abstract**

A method (100) for optimizing a layout for a distribution pipe system is described herein, said method comprising: specifying a problem domain of the system and encoding the problem domain into a Constraint Programming "CP" model (110), producing a constraint program solver (120) and using said solver to explore the space in which the system is to be positioned and identify a problem or problems in said space, finding a solution to said problem or problems (130), and checking (135) if said solution is valid and wherein if said solution is valid. In some examples described herein, the method further comprises the step of visualising said valid solution by converting the solution into a 3D visual format (140) and outputting (150) the valid solution in said 3D format.

## Description

### TECHNICAL FIELD

The examples described herein relate to methods and devices for optimising the design of a distribution system.

### BACKGROUND

Agent distribution systems, such as fire suppression systems, are found in aircraft and buildings. To be able to suppress a fire, a fire suppression system must deliver an agent from its container to nozzles or other orifices through a network of pipes so that the fire suppression substance can reach the various parts of the aircraft or building, at required rate or flux, where the fire is located.

In the traditional design of such fire suppression systems, pipe layouts are drawn manually and the design is determined by an iterative process relying fully on expert knowledge, which is time costly.

There is therefore a need for an improved method of designing a fire suppression system that reduces cost, weight and time.

### SUMMARY

A method for optimizing a layout for a distribution pipe system is described herein, said method comprising specifying a problem domain of the system and encoding the problem domain into a Constraint Programming "CP" model, producing a constraint program solver and using said solver to explore the space in which the system is to be positioned and identify a problem or problems in said space, finding a solution to said problem or problems, checking if said solution is valid.

In some examples, if said solution is valid, the method further comprises the step of visualising said valid solution by converting the solution into a 3D visual format and outputting the valid solution in said 3D format.

A device configured to perform this method is also described herein.

In some examples, the CP model is created based on user input and/or other requirements.

In some examples, the CP model may comprise any or all of discrete integer variables, graph variables and global constraints.

In some examples, the global constraints may be limitations of design space and weight for components such as cylinders, pipes, nozzles and/or other components

In some examples, the step of checking said solution may be performed by a hydraulic calculator.

In some examples, if said solution is determined not to be valid, the method (or device configured to perform the method) reverts back to and repeats said steps of specifying said problem, producing a CP model and finding a solution to said problem.

In some examples, the method (or device configured to perform the method) determines how an agent flows through the network pipe system. This step may be performed by the hydraulic calculator as it is validating the solutions, as described above.

In some examples, said step of determining how said agent flows comprises determining the direction and/or mass flow rate of said agent in said agent distribution pipe system.

The method and device described herein that is configured to perform these methods further comprises performing the step of filtering out unfeasible designs.

A device is described herein which has means that is configured to perform any of the methods described herein. In some examples the device may be a processor.

A system for optimising a layout of a pipe distribution system is also described herein comprising: a constraint programing solver system; a hydraulic calculator system; a visualization system; one or more processing resources; and one or more memory resources configured to store executable instructions, wherein the executable instructions when executed by the one or more processing resources cause the system to: encode a problem domain into a graph-based Constraint Programming (CP) model; create a graph problem; use the constraint programming solver system to explore search space and find solutions to the problem and run hydraulic calculations for solutions found by the solver. In some examples, the system is further configured to visualize the valid solutions in 3D format and output the valid solutions for the distribution pipe system.

In some examples the system may comprise a fire suppression system, a ventilation system, or refrigerant networks.

In some examples, the graph problem is created based on user input and other requirements.

In some examples, the system may further comprise means configured to specify a problem domain of the system and encoding the problem domain into a Constraint Programming "CP" model.

The CP model may comprise any or all of discrete integer variables, graph variables and global constraints.

In any of the examples described herein the distribution pipe system may comprise a fire suppression system, a ventilation system, or refrigerant networks.

### BRIEF DESCRIPTION OF THE DRAWINGS

Figure 1 depicts a method of optimisation of the layout of a fire suppression system
Figure 2 depicts a typical layout of a fire suppression system
Figure 3 depicts a 3D image of a layout of a fire suppression system such as that shown in figure 2.

### DETAILED DESCRIPTION

The new device and methods described herein aim to optimize a system by which pipe layouts or agent distribution layouts are generated and are able to automatically generate such layouts that are optimized in space, weight and cost

The examples described herein are for use in fire suppression systems, however, these devices and methods are not limited to use only with fire suppression systems but can also be used for other agent distribution systems, such as air ventilation systems, refrigerant networks e.g. those used in distributed HVAC systems. The method, system and device may alternatively be used for heating or refrigeration systems. In some examples, the agent that is distributed may be a gas, liquid, mixture of gas and liquid or foam, depending on the type of system.

The method optimises the design of the layout by filtering out unfeasible designs. This allows for a reduction in time for generating feasible layouts that satisfy the requirements and discover potential layouts that an expert might not be able to design manually.

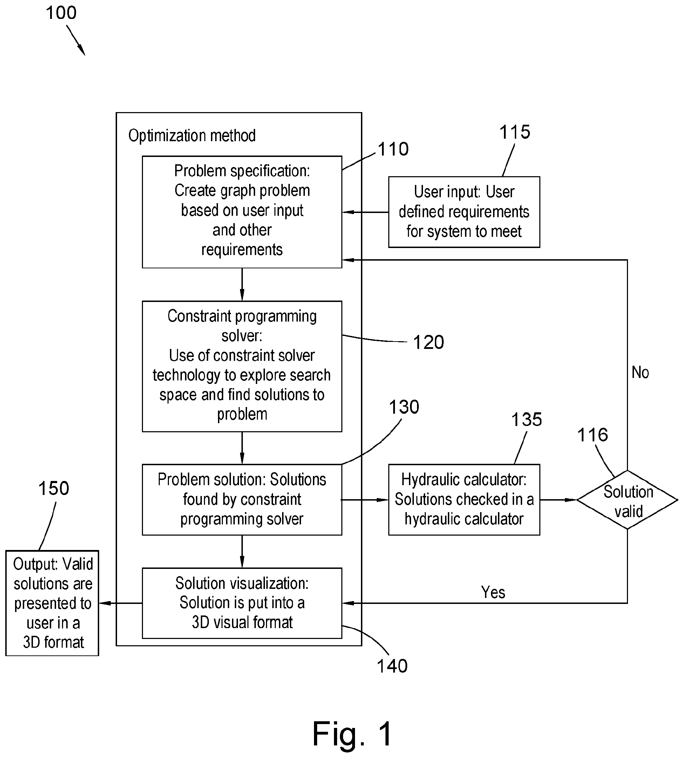

The optimisation system algorithm is configured to perform the method 100 depicted in the flow chart of figure 1. As can be seen from that figure, the method comprises the steps of specifying the problem 110. In this step 110, the problem is represented as a "graph problem" based on user input and system requirements.

This is done by first encoding a problem domain of a fire suppression system (or other agent distribution system) into a Constraint Programming (CP) model. This problem domain may comprise specifications that a designer or engineer may provide for input into the optimization model. For example, a designer may request the layout to include between 2 and 6 nozzles, and between 10 and 15 tees, etc. Such requirements of a pipe layout system, including the parameter or specifications may therefore form part of the problem domain.

Requirements such as predefining locations of some devices, excluding parts of the 3D space for a set of devices and/or pipes, and specifying the possible allowed/disallowed connections between specific device types may be input by a user during this step. The user input may comprise user defined requirements that the system is required to meet 115. An example of such requirements is the definition of the range of the desired number of each device type that the system should engender.

The CP model then converts and provides the problem in a mathematical formalism in the form of discrete integer variables, graph variables and global constraints.

The discrete integer variables of the mathematical formalism are mathematical objects that are used to represent some elements of the design-space and 3D-layouts, such as, the number of nozzles, cylinders, pipes and tees, each pipe length/diameter, and the x, y, and z coordinates of each device, etc. For example, the variables may comprise different pipe diameters, lengths, cylinder orientation etc.

Graph variables are mathematical objects/structures composed of a set of nodes/vertices and a set of edges/arcs linking those edges. The graph variables may be used to represent the 3D-layout of a fire suppression system (or other agent distribution system) by representing the set of devices and pipes linking them on the design-space..

In summary, in this step, 110, the problem is encoded by the CP model to provide a graph-variable representation where devices and connections are represented by nodes and arcs of the graph. This graph based representation can include a number of attributes which will represent the different aspects of the fire suppression system (or other agent distribution system), such as pressure, mass flow rate, and positioning.

To ensure the requirements of the system are satisfied, a set of constraints including graph constraints and global constraints are also imposed on the graph-variables and graph-attributes. Some of the user requirements may also be applied to/on those integer/graph variables using a variety of constraints such as logical, arithmetic, graph and or global constraints. Those constraints will ensure the solutions generated by the optimization solver (assigning values to those variables) will satisfy the requirements of the layout.

Once encoded, a CP solver is then invoked 120 to explore the design-space in order to find feasible fire suppression systems.

In this step, the discrete integer variables can be assigned to integer values in the solution computed by the solver.

The CP solver 120 is used to encode the formalism created by the CP model. The solver has to find solutions where graph-variables are assigned values from their domain. Each value represents a collection of devices and connections selected in the layout system. Other aspects of the fire suppression system that are critical to creating a valid layout are encoded by associating attributes to nodes (devices) and arcs (connections). Examples of attributes are: the position of the device in the layout, the flow coefficient of each device and connection, etc.

The global constraints may include the limitations of design space and weight for cylinders, pipes, nozzles and/or other components. For instance, an all-different global constraint is responsible for ensuring that the positions of all devices in the 3D-space are different. While ensuring the solutions to satisfy the user requirements, those global and graph constraints are necessary to efficiently prune the design-space to filter unfeasible search-space.

An example of a graph constraint as discussed above may be a constraint requiring a path to exist from a cylinder to some nozzles and such path to pass through some pressure regulator.

The CP solver uses these constraints to filter the design-space in order to prune all possible layouts that do not comply with system requirements. Thus, the layouts/solutions generated by the solver automatically adhere to all system requirements. The main constraints may include: The global "all-different" constraint that enforces that all values assigned to a set of variables are all pairwise different, element constraint, table-constraint, graph-union, graph-disjoint, in addition to arithmetic and logical constraint. For instance, the "all-different" constraint is used to enforce that a different position is used for every device included in the fire suppression system. The relationship between mass flow rate and pressure difference is then encoded using arithmetic constraint of attributes variables of corresponding devices and/or connections.

This solver is configured by providing a specific search procedure/algorithm and heuristics. Once configured, this CP solver is executed to explore the design-space using the defined settings 120 in order to find layouts that satisfy the requirements (i.e. solutions) 130. The solution provides an optimal pipe network that includes locations of each component and size of pipes.

A hydraulic calculator is used in step 135 to check and validate the solutions found in step 120. That is, thee found solutions may be imported to the hydraulic calculator and the hydraulic calculator may output pressure loss and flow rate or flux. Pressure loss and flow rate from all the found solutions are then compared and the optimal solution is the one that has the minimal pressure loss and required flow rate.

The solution(s) computed by the CP solver is ensured to satisfy all constraints that are provided to the CP solver. For example, a solution computed by the solver will not position two devices at the same location because an all-different constraint has been imposed on those position variables.

In this step, the agent's mass flow rate can also be impacted by the pressure difference in the fire suppression system. First, the optimization method must be able to find how an agent flows throughout the fire suppression system. This includes the direction and mass flow rate of the agent. Second, the optimization method needs to represent the location of each device and connection in a 3D space in order to be analysed by the physics based hydraulic calculator.

The optimization methods, systems and devices must be able to represent different devices that can be used in a fire suppression system. This includes devices such as cylinders, valves, nozzles, and pressure regulators together with different types of connections between devices such as pipes and hoses and their fittings.

If the generated solutions are found to be not valid 116, the method reverts back to step 110 and repeats steps 110, 120 and 130 to generate new solutions. The user can also change its requirements of 115.

If the generated solution (by 120) is found to be valid by the hydraulic calculator (135) in step 116, then, in some examples, the method may move on to step 140 which comprises solution visualisation. In this step, the solution may be converted into a 3D visual format and presented to the user 150. These steps of visualisation may be optional.

That is, when a valid fire suppression system has been generated by the optimization method and system, a 3D representation may be created. In this way, the method is able to generate optimal layouts for a fire suppression system, representing them in a three dimensional (3D) space. These solutions position connectors such as pipes and hoses, and devices like cylinders, regulators, nozzles included in the architecture in a 3D space satisfying the needed requirements.

This representation may include the position of each device, the connections between devices, and the volume of each device. This part of the tool is highly customizable with options of different colours, verbosity, and shape. This representation can then be used to build a physics based model within the hydraulic calculator in order to validate the fire suppression system.

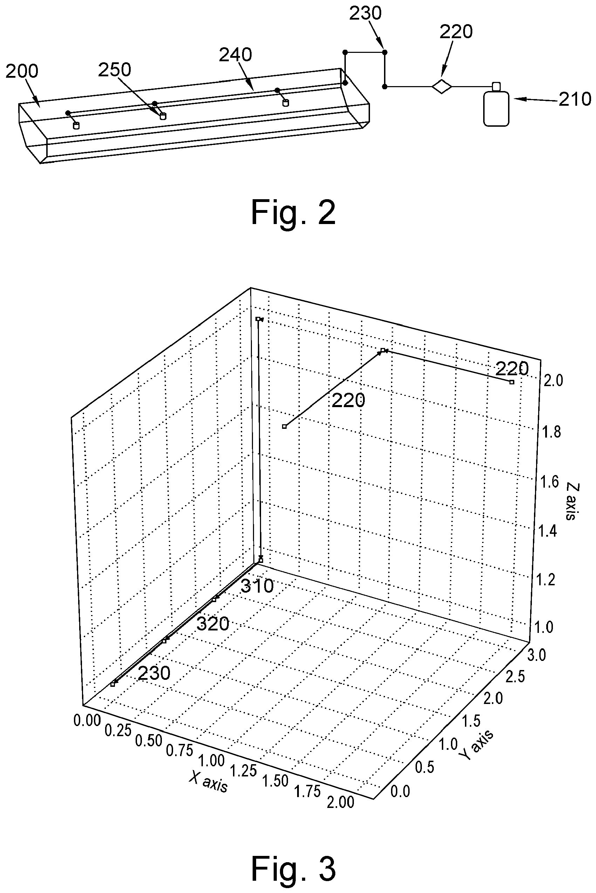

Figure 2 depicts an example of the type of situation wherein the examples described herein may be used. For example, the system and method described herein may be used in a cargo fire suppression system which has the layout as shown in figure 2. As can be seen here in some examples, agent is delivered to cargo 200 from cylinders 210 to nozzles 250 through multi-components, such as pipes 240, pressure regulators 220, via connections 230 which may comprise tees or bends. Figure 3 depicts a 3D image of a layout of a fire suppression system such as that shown in figure 2.

The examples of methods and designs described herein provides benefits of optimized design with minimum expert knowledge, while assuring all requirements are met. The use of CP to intelligently model and explore the design space and automate the process of finding feasible system layouts can lead to a shorter design time by reducing the number of analysis that needs to take place, as well as less reliance of domain experts. New designs, satisfying all requirements, which are not trivial to the domain experts can be discovered. In addition, the proposed method uses CP to cover this gap by automatically generating fire suppression layouts that are optimized in space, weight and cost.

## Claims

1. A method (100) for optimizing a layout for a distribution pipe system, said method comprising:
specifying a problem domain of the system and encoding the problem domain into a Constraint Programming "CP" model (110),
providing a CP solver (120) and using said solver to explore a space in which the system is to be positioned and identify a problem or problems in said space,
finding a solution to said problem or problems (130),
checking (135) if said solution is valid.

2. The method of claim 1 wherein, if said solution is valid, the method further comprises the step of visualising said valid solution by converting the solution into a 3D visual format (140) and outputting (150) the valid solution in said 3D format.

3. The method of claim 1 or 2 wherein the CP model is created based on user input and/or other requirements.

4. The method of any preceding claim wherein the CP model comprises any or all of discrete integer variables, graph variables and global constraints.

5. The method of any preceding claim wherein said step (135) of checking said solution is performed by a hydraulic calculator

6. The method of any preceding claim wherein, if said solution is determined not to be valid in said step (135) the method reverts back to and repeats said steps of specifying said problem (110), producing a CP model (120) and finding a solution to said problem (130).

7. The method of any preceding claim, wherein said steop (135) of checking if said solution is valid further comprises determining how an agent flows through the network pipe system, and optionally wherein said step of determining how said agent flows comprises determining the direction and/or mass flow rate of said agent in said agent distribution pipe system.

8. The method of any preceding claim further comprising the step of filtering out unfeasible designs.

9. The method of any preceding claim wherein the distribution pipe system comprises a fire suppression system, a ventilation system, or refrigerant networks.

10. A device comprising means configured to perform the method of any preceding claim.

11. A system for optimising a layout of a pipe distribution system comprising:
a constraint programing solver system;
a hydraulic calculator system;
a visualization system;
one or more processing resources; and
one or more memory resources configured to store executable instructions, wherein the executable instructions when executed by the one or more processing resources cause the system to:
encode a problem domain into a graph-based Constraint Programming (CP) model;
create a graph problem;
use the constraint programming solver system to explore search space and find solutions to the problem; and
run hydraulic calculations for solutions found by the solver.

12. The system of claim 11,
further comprising the step of visualizing the valid solutions in 3D format; and output the valid solutions for the distribution pipe system.

13. The system of claim 11 or 12, wherein the graph problem is created based on user input and/or other requirements.

14. The system of claim 11, 12 or 13, further comprising means configured to specify a problem domain of the system and encoding the problem domain into a Constraint Programming "CP" model (110), and optionally wherein the CP model comprises any or all of discrete integer variables, graph variables and global constraints.

15. The system of any of claims 11 to 14 wherein the distribution pipe system comprises a fire suppression system, a ventilation system, or refrigerant networks.
